# EUROPÄISCHE PATENTANMELDUNG

(11) **EP 0 525 505 A1**
(43) Veröffentlichungstag der Anmeldung: **03.02.1993**
(21) Anmeldenummer: 92112022.6
(22) Anmeldetag: 15.07.1992
(51) Int. Cl.: B01D 21/24, C02F 11/12, C02F 1/00

(54) **Entwässerungsbehälter**

(30) Priorität: 15.07.1991 DE 4123343
(71) Anmelder: Kreuzer, Jörg, Dipl.-Volkswirt, D-53819 Neunkirchen-Seelscheid (DE); Sistig, Kurt, Dipl.-Ing., D-53804 Much (DE)
(72) Erfinder: Kreuzer, Jörg, Dipl.-Volkswirt, D-53819 Neunkirchen-Seelscheid (DE); Sistig, Kurt, Dipl.-Ing., D-53804 Much (DE)
(74) Vertreter: Nau, Walter, Dipl.-Ing.

(57) **Zusammenfassung**

Entwässerungsbehälter zur Trennung von festen Materialien und Flüssigkeit mit einem verschließbaren Abfluß zur Entnahme der Flüssigkeit. Dabei ist an den Abfluß im Inneren des Behälters ein Rohrsystem angeschlossen, dessen freies Ende innerhalb des Behälters höhenbeweglich angeordnet ist.

## Beschreibung

Die Erfindung bezieht sich auf einen Entwässerungsbehälter, insbesondere zur Schlammentwässerung und/oder Trennung von festen Materialien und Flüssigkeit, wobei der Behälter einen verschließbaren Abfluß zur Entnahme der Flüssigkeit aufweist.

Derartige Entwässerungsbehälter sind allgemein bekannt. Sie weisen im unteren und seitlichen Bereich eine durch ein Sieb oder Filter abgedeckten Raum auf. An diesen Raum ist der verschließbare Abfluß angeschlossen. Wird in einem solchen Behälter Schlamm oder dergl. eingefüllt, so tritt die Flüssigkeit durch das Sieb oder den Filter durch, sammelt sich in dem unteren Raum und kann über den Abfluß abgeleitet werden. Abgesehen davon, daß die Trennung zwischen Feststoffen und der Flüssigkeit von der Qualität des Siebes bzw. des Filters abhängt, müssen derartige Entwässungsbehälter rückgespült und gereinigt werden, bevor sie erneut benutzt werden können. Diese Rückspülung bzw. dieser Reinigungsvorgang ist zeit- und kostenaufwendig.

Aufgabe der vorliegenden Erfindung ist es daher, einen Entwässerungsbehälter zur Verfügung zu stellen, der einen hohen Wirkungsgrad bezüglich der Trennung der Feststoffe und der Flüssigkeit aufweist und darüberhinaus mit geringem Aufwand entleert und gereinigt werden kann. Die Aufgabe der Erfindung wird dadurch gelöst, daß innerhalb des Behälters ein Rohrsystem angeordnet ist, das mit dem Abfluß verbunden ist und dessen anderes Ende innerhalb des Behälters höhenbeweglich angeordnet ist. Es kommt wesentlich darauf an, daß das Ende des Rohrsystems nach Trennung der Feststoffe und der Flüssigkeit in den Bereich der Flüssigkeit abgesenkt werden kann und diese durch den Abfluß abfließen kann. In vorteilhafter Weise ist das Rohrsystem so gestaltet, daß innerhalb des Behälters ein Rohr befestigt ist, das mit dem Abfluß verbunden ist und daß am anderen Ende des Rohres zumindest ein Rohrstück vorgesehen ist, das teleskopartig gegenüber dem Rohr in Richtung Behälteroberkante verschiebbar ist. Selbstverständlich können mehrere Rohrstücke teleskopartig aneinander bzw. ineinander gelagert sein. Entscheidend kommt es darauf an, daß die Öffnung des letzten Rohrstückes in ausgezogenem Zustand bis in die Nähe des oberen Randes des Entwässerungsbehälters reicht. Ist das bzw. die Rohrstücke zu dem festen Rohr im Behälter ausgefahren, so kann in den Behälter Schlamm und dergl. eingefüllt werden. Die Trennung zwischen den Feststoffen und der Flüssigkeit erfolgt nach dem Sedimentationsprinzip, d.h. daß sich das feste Material nach unten ablagert. Zur Beschleunigung des Sedimentationsvorganges können Hilfsmittel dem Schlamm oder dergl. beigegeben werden. Ist der Sedimentationsvorgang beendet, d.h. hat sich das feste Material nach unten abgesetzt, so kann das oder die Rohrstücke teleskopartig gegenüber dem festen Rohrstück nach unten geschoben werden, so daß die Flüssigkeit in die Öffnung des Rohrstückes eintreten und durch den Abfluß abfließen kann. Vorzugsweise ist das Rohr und das Rohrstück senkrecht ausgerichtet. Sie können auch schräg verlaufen, da es nur darauf ankommt, daß die Öffnung des Rohrstückes höhenbeweglich angeordnet ist. Es ist gemäß Anspruch 1 auch möglich, statt der Teleskopanordnung das Rohrstück schwenkbar am Rohr oder Abfluß zu befestigen oder ein Schlauchstück, z.B. als Zwischenstück, zu verwenden, damit das Ende des Rohrsystems oder des Rohrstücks höhenbeweglich ist.

Damit das Ende des obersten Rohrstückes nicht bis in den Bereich der abgesetzten Feststoffe verschoben werden kann, weist das Ende des Rohrstückes eine im wesentlichen horizontal ausgerichtete Platte auf, so daß diese sich auf das abgesetzte Material auflegt und das Rohrstück nicht beliebig weiter abgesenkt werden kann. Der Hubweg des bzw. der Rohrstücke zu dem festen Rohr muß so ausgelegt sein, daß die Teile soweit ineinander geschoben werden können, daß alle Flüssigkeit durch die Öffnung des Rohrstückes austreten kann. Das oder die Rohrstücke sind durch Dichtungen gegeneinander bzw. gegenüber dem Rohr abgedichtet, so daß keine Feststoffe oder Flüssigkeit dazwischen gelangen kann.

In vorteilhafter Weise weist die Platte nach oben gebördelte Ränder auf und ist nach Art einer Pfanne ausgebildet, so daß keine Feststoffe über den Plattenrand gelangen können. Die Platte kann auch nach Art einer Schüssel ausgebildet sein. Damit keine Feststoffe in die Öffnung des Rohrstückes gelangen können, beispielsweise wenn der Absetzvorgang noch nicht vollständig abgeschlossen ist und das Rohrstück nach unten verschoben wird, kann die Öffnung des Rohrstückes oder die Platte von einem Sieb überdeckt sein. Hilfreich können auch Schwimmkörper im Bereich der Platte sein. Die Verschiebung des Rohrstückes kann sowohl vollautomatisch durch eine Hilfskraft erfolgen, wobei die Steuerung der Hilfskraft über ein Schwimmersystem erfolgen kann. Die Steuerung kann aber auch willkürlich durch eine Bedienungsperson vorgenommen werden.

Von Bedeutung ist, daß das Rohrstück mit Sicherheit ausgefahren, d.h. bis in Höhe des Randes des Behälters angehoben ist, bevor Schlamm oder dergl. in den Behälter eingefüllt wird. Dies kann beispielsweise durch die vollautomatische Steuerung erfolgen. Die Verschiebung des Rohrstückes kann jedoch auch rein mechanisch über ein Gestänge von außerhalb des Behälters durch eine Bedienungsperson erfolgen, wobei am Gestänge außerhalb des Behälters ein Griffstück für die Bedienungsperson befestigt sein kann. In vorteilhafter Weise ist das Gestänge bzw. das Griffstück außerhalb des Behälters im Bereich des Aufnahmehakens des Behälters derart angeordnet, daß eine Öse zum Anheben des Behälters zwecks Abtransport des abgesetzten Materials nach Entwässerung erst dann in den Haken eingehängt werden kann, wenn das Rohrstück ausgefahren ist und damit das Griffstück außerhalb des Bereichs des Aufnahmehakens bewegt wurde. Damit ist sichergestellt, daß nach Entleeren des abgesetzten Schlammes und nach Reinigen des Behälters das Rohrstück auch tatsächlich ausgefahren ist.

Zur weiteren Erläuterung der Erfindung wird auf die Zeichnungen verwiesen, in denen Ausführungsbeispiele der Erfindung vereinfacht dargestellt sind. Es zeigen:
Fig. 1 einen Entwässerungsbehälter, der als Absetzkippbehälter ausgebildet ist, in Seitenansicht;
Fig. 2 einen Entwässerungsbehälter gemäß Fig. 1 mit einem Teilschnitt durch die Behälterwand, so daß Einblick in den leeren Entwässerungsbehälter möglich ist;
Fig. 3 eine Ansicht eines Entwässerungsbehälters gemäß Fig. 2, der mit Schlamm gefüllt ist;
Fig. 4 einen Entwässerungsbehälter gemäß Fig. 2, bei dem bereits eine Trennung zwischen Flüssigkeit und Feststoffen erfolgt ist;
Fig. 5 einen Entwässerungsbehälter gemäß Fig. 2, bei dem Flüssigkeit bereits abgelassen ist;
Fig. 6 einen Entwässerungsbehälter in Stirnansicht mit Teilschnitt durch die Behälterwandung, so daß Einblick ins Innere des leeren Behälters möglich ist;
Fig. 7 eine Stirnansicht gemäß Fig. 6 mit Teilschnitt durch die Behälterwandung, in dem bereits eine Trennung zwischen Flüssigkeit und Feststoffen erfolgt ist und
Fig. 8 eine Stirnansicht gemäß Fig. 6, bei der die Flüssigkeit oberhalb der Feststoffe bereits abgelassen wurde.

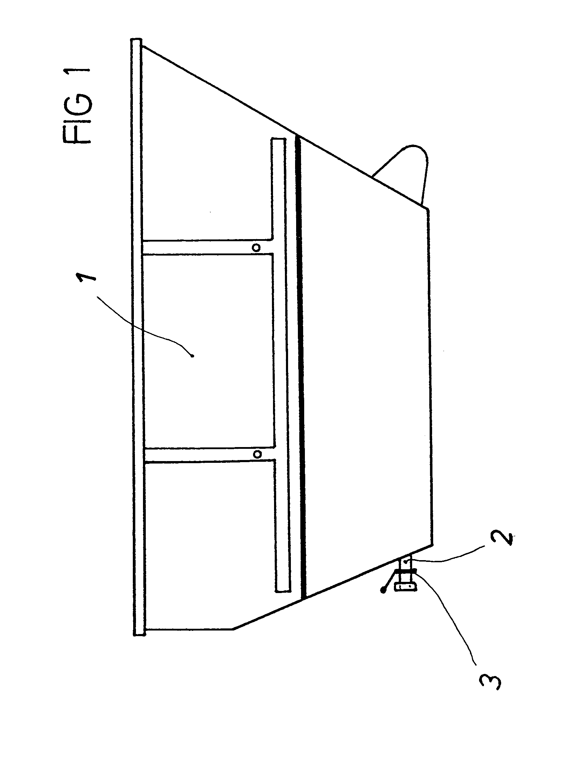

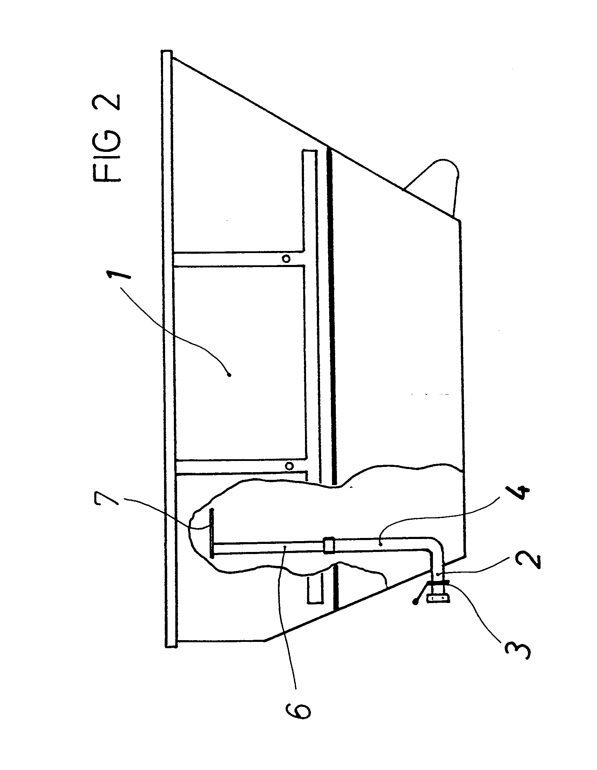

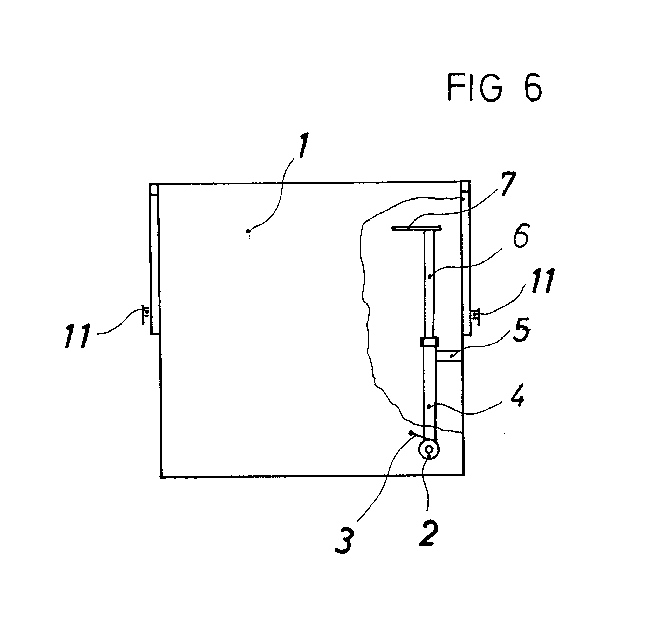

In den Fig. 1 bis 8 ist, soweit im einzelnen dargestellt, mit 1 ein Entwässerungsbehälter bezeichnet, der als Absetzkippbehälter ausgebildet ist. Der Behälter weist kurz oberhalb des Bodens einen Abfluß 2 auf, der mittels eines Absperrhahns 3 verchließbar ist. Wie insbesondere den Fig. 2 bis 8 zu entnehmen ist, ist an den Abfluß 2 ein Rohr 4 angeschlossen, das nach einer Biegung von ca. 90 senkrecht innerhalb des Entwässerungsbehälters 1 ausgerichtet ist. Das Rohr 4 ist (Figuren 6 bis 8) durch eine Lasche 5 im Inneren des Behälters befestigt. Im Rohr 4 ist ein Rohrstück 6 angeordnet, das teleskopartig im Rohr 4 verschiebbar angeordnet ist. Am oberen Ende des Rohrstückes 6 ist eine Platte 7 befestigt, die sich im wesentlichen horizontal erstreckt.

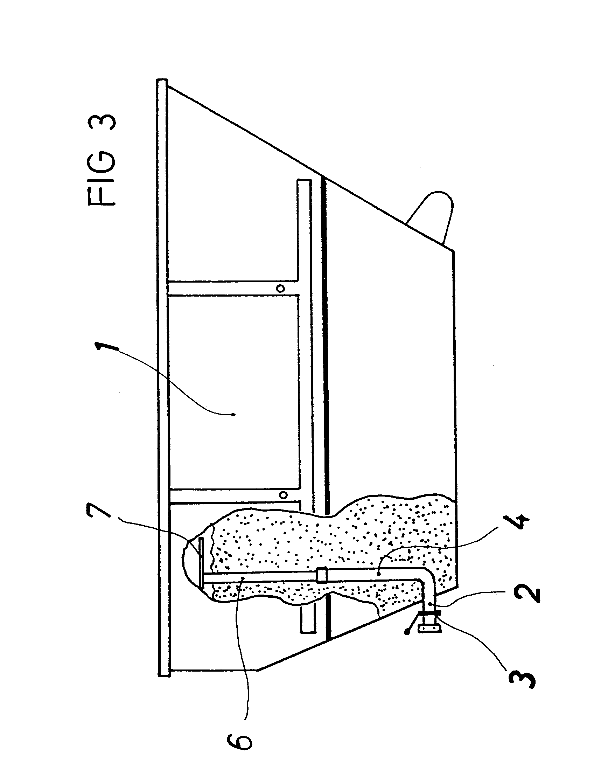

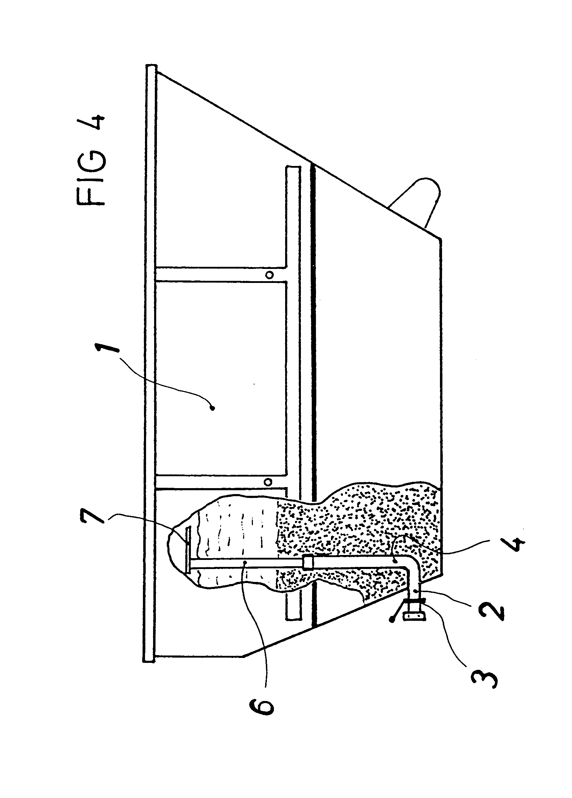

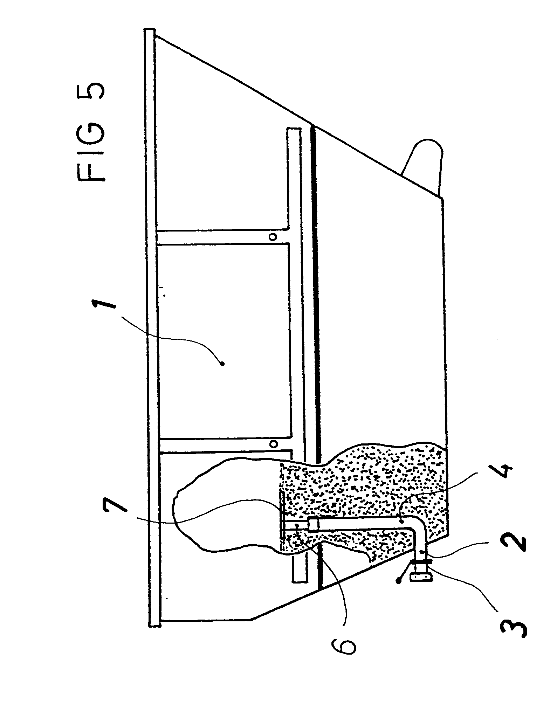

Vor Einfüllen des zu entwässernden Schlammes oder sonstiger zu entwässernder Materialien wird das Rohrstück 6 mit der Platte 7 soweit angehoben, d.h. aus dem Rohr 4 verschoben, daß das Ende des Rohrstückes mit der Platte 7 im Bereich des oberen Randes des Entwässerungsbehälters angeordnet ist. Dann wird der Schlamm eingefüllt, und zwar soweit, daß dessen Spiegel nicht ganz bis zum Ende des Rohrstückes bzw. der Platte reicht (Fig. 3). Nach Absetzen der Feststoffe sammelt sich die Flüssigkeit oberhalb der Feststoffe, da eine Sedimentaion stattgefunden hat (Fig. 4). Danach wird, wie in Fig. 5 gezeigt, das Rohrstück 6 mit der Platte 7 vertikal nach unten, d.h. in das Rohr 4 geschoben, und zwar soweit bis die Platte die Festkörper erreicht. Da nun die Öffnung des Rohrstückes in bzw. unterhalb der Flüssigkeit liegt, kann die Flüssigkeit über den Abfluß 2 nach Öffnen des Absperrhahns 3 abfließen. Die abgesetzten Feststoffe bzw. die festen Schlammanteile können nun aus dem Entwässerungsbehälter bzw. Absetzkippbehälter entfernt werden, wobei auch ein leichtes Spülen und Reinigen des Absetzkippbehälters möglich ist, da abgesehen von dem Rohr 5, dem Rohrstück 6 und der Platte 7 keine störenden Teile im Absetzkippbehälter angeordnet sind.

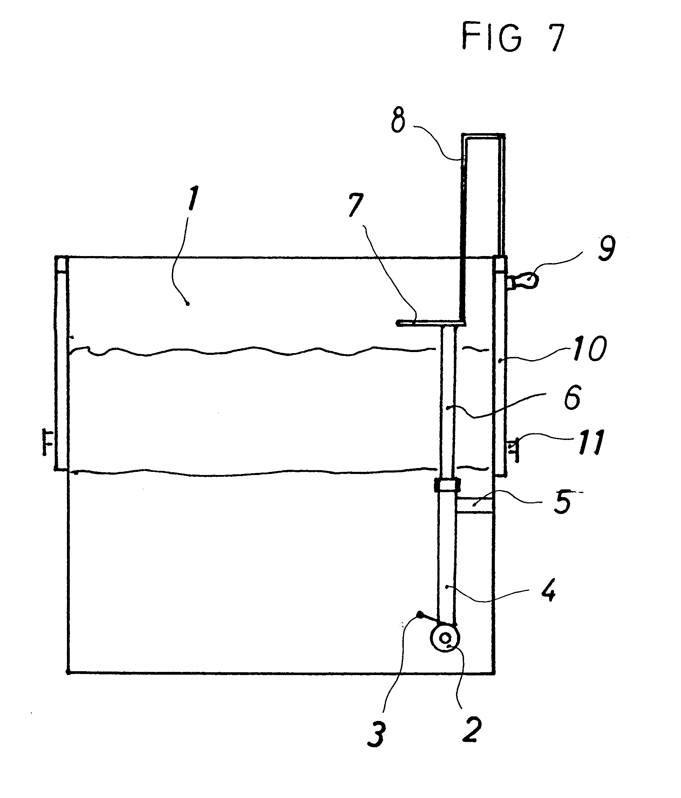

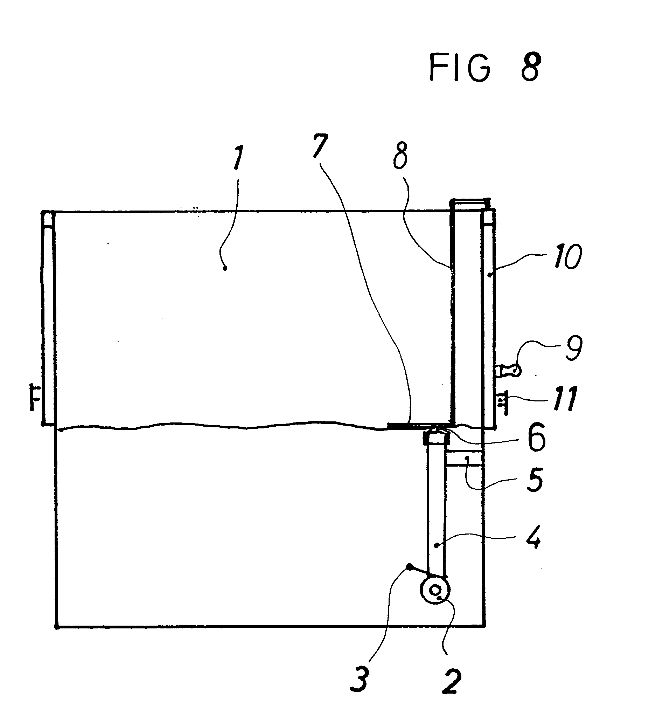

Wie insbesondere in den Fig. 7 und 8 dargestellt, kann an dem Rohrstück 7 bzw. der Platte 6 ein Gestänge 8 befestigt sein, das außerhalb der Behälterwandung ein Griffstück 9 aufweist. Das Griffstück 9 bzw. der außerhalb der Behälterwandung angeordnete Gestängeteil ist in einer Führung 10 angeordnet, in der das Grifftstück 9 oder das Gestänge 8 arretierbar ist. Die Führung und damit das Griffstück 9 sind in der Nähe eines Behälteraufnahmehakens 11 angeordnet, so daß die Öse eine Aufnahmekette erst dann in den Behälteraufnahmehaken 11 eingehängt werden kann, wenn das Griffstück 9 bzw. das Gestänge 8 und damit das Rohrstück 6 nach oben verschoben sind, so daß der Absetzkippbehälter zur Neuaufnahme von zu klärendem Schlamm aufnahmebereit ist.

## Patentansprüche

1. Entwässerungsbehälter, inbesondere zur Schlammentwässerung und/oder Trennung von festen Materialien und Flüssigkeit, wobei der Behälter einen verschließbaren Abfluß zur Entnahme der Flüssigkeit aufweist,
dadurch gekennzeichnet, daß innerhalb des Behälters (1) ein Rohrsystem angeordnet ist, das mit dem Abfluß (2) verbunden ist und dessen anderes Ende innerhalb des Behälters (1) höhenbeweglich angeordnet ist.

2. Entwässerungsbehälter nach Anspruch 1, dadurch gekennzeichnet, daß innerhalb des Behälters (1) ein Rohr (4) befestigt ist, das mit dem Abfluß (2) verbunden ist und daß am anderen Ende des Rohres (4) zumindest ein Rohrstück (6) vorgesehen ist, das teleskopartig gegenüber dem Rohr (4) in Richtung Behälteroberkante verschiebbar ist.

3. Entwässerungsbehälter nach einem der Ansprüche 1 oder 2,
dadurch gekennzeichnet, daß an dem freien Ende des Rohrstückes (6) eine im wesentlichen horizontal ausgerichtete Platte (7) befestigt ist.

4. Entwässerungsbehälter nach einem der vorhergehenden Ansprüche,
dadurch gekennzeichnet, daß die Platte (7) nach oben gebördelte Ränder nach Art einer Pfanne aufweist oder schüsselförmig ausgebildet ist.

5. Entwässerungsbehälter nach einem der vorhergehenden Ansprüche,
dadurch gekennzeichnet, daß im Bereich der Platte (7) Schwimmkörper angeordnet sind.

6. Entwässerungsbehälter nach einem der vorhergehenden Ansprüche,
dadurch gekennzeichnet, daß am Ende des Rohrstückes (6) oder an der Platte (7) zumindest ein die Öffnung des Rohrstückes (6) überdeckendes Sieb angeordnet ist.

7. Entwässerungsbehälter nach einem der vorhergehenden Ansprüche,
dadurch gekennzeichnet, daß das Rohrstück (6) elektrisch, hydraulisch/pneumatisch oder mechanisch in Abhängigkeit des Flüssigkeitsstandes selbsttätig oder willkürlich zum Rohr (4) verschiebbar ist.

8. Entwässerungsbehälter nach einem der vorhergehenden Ansprüche,
dadurch gekennzeichnet, daß am Rohrstück (6) oder an der Platte (7) ein Gestänge (8) befestigt ist, das über den Rand des Behälters (1) ragt.

9. Entwässerungsbehälter nach einem der vorhergehenden Ansprüche,
dadurch gekennzeichnet, daß am Gestänge (8) ein Griffstück (9) befestigt ist und daß das Griffstück (9) oder Gestänge (8) mit einer Führung (10) außerhalb des Behälters (1) in Wirkverbindung steht und mit der Führung (10) arretierbar ist.
